# EUROPÄISCHE PATENTSCHRIFT

(11) **EP 1 619 727 B1**
(45) Veröffentlichungstag und Bekanntmachung des Hinweises auf die Patenterteilung: **09.10.2013**
(21) Anmeldenummer: 05015868.2
(22) Anmeldetag: 21.07.2005
(51) Int. Cl.: H01L 31/042, F24J 2/46, E04D 13/18, H01L 31/048

(54) **Vorrichtung zum Befestigen von Solarmodulen auf Flachdächern auf Industriehallen**
Means for fastening solar modules on flat roofs on industry halls
Dispositif pour fixer des modules solaires sur toits plats sur des halls industriels

(30) Priorität: 21.07.2004 DE 102004035355; 16.07.2005 DE 102005033780
(43) Veröffentlichungstag der Anmeldung: 25.01.2006
(73) Patentinhaber: Goldbeck Solar GmbH, 69493 Hirschberg an der Bergstrasse (DE)
(72) Erfinder: Goldbeck, Joachim, 69469 Weinheim (DE)
(74) Vertreter: DTS München

(56) Entgegenhaltungen:
- EP-A- 1 035 591
- WO-A-96/18857
- DE-U1- 20 312 641
- JP-A- 11 210 192
- JP-A- 2000 064 523
- US-A1- 2002 029 799
- US-A1- 2004 128 923

## Beschreibung

Die Erfindung bezieht sich ganz allgemein auf eine Vorrichtung zum Befestigen von Solarmodulen auf Flachdächern, insbesondere auf Industriehallen.

Vorrichtungen der hier in Rede stehenden Art sind hinlänglich aus der Praxis bekannt. Dabei handelt es sich regelmäßig um Gestelle, die auf den Flachdächern montiert werden. An diesen Gestellen werden die Funktionsgruppen, so beispielsweise Solarmodule unterschiedlichster Art, mit Befestigungsmitteln montiert. Problematisch ist einerseits die Anbringung des Gestells auf dem Flachdach und andererseits die Befestigung der Funktionsgruppen am Gestell. Dabei ist zu beachten, dass die Flachdächer regelmäßig thermisch isoliert sind und eine Anbringung auf der thermischen Isolation abermals Probleme bereitet. Wählt man eine Befestigung in oder unter der thermischen Isolierung, entstehen Kältebrücken und droht die Gefahr von Undichtigkeit gegen Regenwasser.

Aus der DE 203 12 641 U1 ist bereits ein Flachdach-Montagegestell für Photovoltaik-Module bekannt, welches aus einem u-förmigen Betonelement mit unterschiedlich hohen Schenkelstümpfen besteht, wobei in die Schenkelstümpfe Verankerungselemente eingelegt sind. Bei den Verankerungselementen handelt es sich um ein geschlitztes Profilrohr, das bspw. als Halfenschiene ausgeführt ist, welche über die gesamte Länge der Schenkelstümpfe in das Betonelement eingegossen ist. Die Photovoltalk-Module werden auf die Oberflächen der Schenkelstümpfe aufgelegt und mit bekannten Befestigungselementen und entsprechenden Schrauben an den Profilrohren bzw. Halfenschienen befestigt.

Aus der JP 11210192 A ist ebenfalls eine Vorrichtung zum Befestigen von Solarmodulen auf Flachdächern bekannt, welche ein auf dem Dach verankerbares Tragegestell umfasst. Das Tragegestell weist zwei Aufnahmen zur Befestigung der Solarmodule auf, wobei eine der Aufnahmen ein Dämpfungselement umfasst, um die Windanfälligkeit der Vorrichtung zu reduzieren.

Aus der EP 1 035 591 A1 ist ein Abdecksystem zur Anordnung von Solarmodulen auf einer Oberfläche bekannt. Das System umfasst einen sandwichartig aufgebauten Grundkörper, auf dem Dachlatten montiert werden. Über ein stützendes Bauteil können sich entlang der Dachlatten erstreckende Stützprofile montiert werden, auf denen Solarmodule mittels Schrauben befestigbar sind.

Aus der gattungsgemäßen US 2004/0128923 A1 ist für sich gesehen eine Vorrichtung zum Befestigen von Solarmodulen auf Flachdächern bekannt, wobei die Vorrichtung ein Tragegestell mit einer vorderen, einer unteren und einer hinteren Wand umfasst, wobei an der vorderen Wand einer erste untere Aufnahme und an der hinteren Wand einer zweite obere Aufnahme ausgebildet sind. Das Solarmodul wird in die Aufnahmen eingelegt und dort jeweils mit Schrauben fixiert.

Aus der US 2002/0029799 A1 ist für sich gesehen ein Solarbatteriemodul bekannt welches eine vordere und eine hintere Abdeckschicht, eine vordere und eine hintere Einlage sowie dazwischen gepackte Solarzellen umfasst. Sämtliche Elemente des Moduls sind in einem Rahmen gefasst.

Aus der WO 96/18857 ist ein Aufnahmeelemente für Solarmodule bekannt, die über hakenförmige Kopplungselemente miteinander verbunden und insbesondere zur Montage auf Satteldächern geeignet sind. Die Aufnahmeelemente umfassen einen als querschnittlich rechteckiges Hohlprofil ausgebildeten Rahmen sowie je zwei vorspringende Rückhaltestege zur Befestigung der Sonnenmodule. Im Konkreten bilden die Rückhaltestege zwei Aufnahmetaschen für die Querkanten eines Solarmoduls.

Aus der JP 2000/064523 A ist eine Vorrichtung zum Befestigen von Solarmodulen auf Flachdächern bekannt, umfassend einen auf dem Flachdach verankerbaren Rahmen, auf dem über entsprechende Bohrungen vordere kurze Klammern und hintere längere Klammern montiert werden können. An den Klammern sind U-förmige Halteabschnitte angeordnet, in welche die Solarmodule seitlich einschiebbar sind.

Der vorliegenden Erfindung liegt nunmehr die Aufgabe zugrunde, eine Vorrichtung zum Befestigen von Solarmodulen auf Flachdächern derart auszugestalten und weiterzubilden, dass eine einfache und sichere Montage ermöglicht ist. Dabei soll die Konstruktion möglichst einfach herstellbar sein.

Die voranstehende Aufgabe wird durch eine Vorrichtung gemäß Patentanspruch 1 gelöst. Danach umfasst die Vorrichtung zum Befestigen von Solarmodulen auf Flachdächern, insbesondere auf Industriehallen, ein auf dem Dach verankerbares Tragegestell und einen in das Tragegestell einhängbaren Rahmen, an dem das Solarmodul oder Teile davon befestigt ist bzw. sind, wobei das Tragegestell eine obere Aufnahme und eine untere Aufnahme zum Einhängen des Rahmens in geneigter Position umfasst, wobei der Rahmen obere und untere Längsstreben zum Einhängen in die Aufnahme des Tragegestells sowie die Längsstreben verbindende Querstreben umfasst, wobei die Längsstreben im Querschnitt ein C-Profil haben und seitlich über die Querstreben hinausragen und mit den hinausragenden Bereichen zum Einhängen des Rahmens in die Aufnahme des Tragegestells dienen.

In erfindungsgemäßer Weise ist gewährleistet, dass das Tragegestell unabhängig von der zu tragenden Last aufgebaut bzw. auf dem Flachdach gehandhabt und montiert werden kann. Das Tragegestell ist dabei derart ausgelegt, dass dort ein Rahmen mit vorgegebenen Maßen einhängbar ist, wobei das jeweilige Solarmodul an dem Rahmen befestigt bzw. vormontiert Ist. Im Konkreten umfasst das Tragegestell eine obere und eine untere Aufnahme, die auf unterschiedlicher Höhe angeordnet sind, so dass sich beim Einhängen des Rahmens - automatisch - eine geneigte Position entsprechend dem Höhenunterschied der Aufnahmen ergibt. Aufgrund der Vormontage des Tragegestells ergibt sich ein hohes Maß an Montagesicherheit. Aufgrund definierter Kraftübertragungspunkte an "starken" Stellen des Daches lässt sich die Betriebssicherheit abermals erhöhen. Die Verwendung des Tragegestells ermöglicht den Ausschluss flächiger Lasten, die die Dachhaut bzw. Dämmung gefährden könnten. Mit Hilfe des Tragegestells lässt sich ein kraftschlüssiger Verbund mit dem Dach herstellen, der auch extremen Windbedingungen standhalten kann.

Im Konkreten umfasst das Tragegestell erfindungsgemäß eine obere und eine untere Aufnahme zum Einhängen des Rahmens in geneigter Position. Somit ist gewährleistet, dass der Rahmen entsprechend der Anordnung der beiden Aufnahmen unter einem vorgebbaren Winkel einhängbar und somit positionierbar ist.

Wie bereits zuvor ausgeführt, dient der Rahmen zur Befestigung der Solarmodule. Damit der Rahmen einerseits die Solarmodule sicher aufnehmen bzw. tragen kann und sich andererseits mühelos in das Tragegestell einhängen lässt, umfasst dieser in weiter erfindungsgemäßer Weise obere und untere Längsstreben zum Einhängen in das Tragegestell bzw. in die Aufnahme des Tragegestells sowie die Längsstreben verbindende Querstreben. Die Längsstreben sind als C-Profile ausgebildet, wobei der Rahmen mit den C-Profilen in die Aufnahmen des Tragegestells eingehängt wird. In konstruktiver Hinsicht ist dabei vorgesehen, dass die Längsstreben des Rahmens, d.h. die C-Profile, seitlich über die Querstreben zumindest geringfügig hinausragen, so dass die hinausragenden Bereiche der Längsstreben zum Einhängen in die Aufnahmen des Tragegestells dienen. Auch durch diese Maßnahme ist die Verkettung von Rahmen durch Einhängen in die Tragegestelle möglich.

In Bezug auf das Tragegestell ist von Vorteil, wenn dieses einen als Basis dienenden Horizontalträger und zumindest eine auf dem Horizontalträger stehende Vertikalstütze mit der oberen Aufnahme umfasst, wobei bei einer solchen Ausgestaltung der Rahmen auf der der oberen Aufnahme abgewandten Seite auf dem Horizontalträger aufliegt. Die Position des Rahmens wird dabei von der oberen Aufnahme vorgegeben. Ebenso ist es denkbar, dass unmittelbar auf dem Horizontalträger eine untere Aufnahme angeordnet bzw. dort festgelegt ist, so dass durch beide Aufnahmen - untere und obere Aufnahme - die Position bzw. der Winkel des Rahmens definiert ist.

Im Rahmen einer weiteren Ausgestaltung kann das Tragegestell eine zweite, auf dem Horizontalträger stehende Vertikalstütze umfassen, die kürzer ausgebildet ist als die zuvor genannte erste Vertikalstütze. Diese kürze Vertikalstütze umfasst an ihrem freien Ende die untere Aufnahme, wobei die beiden Vertikalstützen entsprechend ihren unterschiedlichen Längen den vom Rahmen einzunehmenden Winkel und somit die Schrägstellung des Rahmens vorgeben.

Die Länge des Horizontalträgers bzw. die Anordnung der Vertikalstützen ist vorzugsweise so ausgewählt, dass die Vertikalstützen nahe den freien Enden des Horizontalträgers, vorzugsweise orthogonal zu dem Horizontalträger, angeordnet sind. Dabei ist es von Vorteil, wenn der Horizontalträger zumindest geringfügig über die Vertikalstützen hinausragt, um nämlich hinreichend Standsicherheit einerseits und den freien Zugang zum Zwecke der Montage andererseits zu gewährleisten.

Die Vertikalstützen sind an dem Horizontalträger befestigt, wobei im Falle einer Ausführung des Horizontalträgers und der Vertikalstützen aus Metall es von Vorteil ist, die Vertikalstützen am Horizontalträger anzuschweißen. Ebenso ist es denkbar, dass die Vertikalstützen mit dem Horizontalträger verschraubt oder dass die beiden Bauteile ineinander bzw. aneinander gesteckt und/oder miteinander verrastet sind. Im Falle des Verschweißens ist eine irreversible und dabei stabile Verbindung geschaffen. Ebenso ist es denkbar, dass die Vertikalstützen integrale Bestandteile des Horizontalträgers sind.

Der Horizontalträger kann unterschiedliche Querschnitte aufweisen und aus den verschiedensten Materialien hergestellt sein. Die Ausbildung als Doppel-T-Träger oder als Hohlprofil aus Stahl bietet die erforderliche Festigkeit bzw. Steifheit.

Die obere und die untere Aufnahme sind in weiter vorteilhafter Weise als Winkelstücke oder Winkelprofile zum Einhängen des Rahmens ausgebildet. Dabei sind die Winkelstücke derart geneigt, dass sie sich zum Einhängen des Rahmens eignen. Außerdem ist es von Vorteil, wenn die Winkelstücke derart dimensioniert und ausgelegt sind, dass beidseits, d.h. auf beiden Seiten der Winkelstücke, Profile bzw. Teile des Rahmens einhängbar sind. Durch diese konstruktive Maßnahme ist gewährlelstet, dass sich beliebig viele Tragegestelle mit eingehängtem Rahmen aneinanderreihen lassen, so dass mit einer entsprechenden Verkettung das gesamte Flachdach eines Gebäudes belegbar ist.

Im Konkreten können die Winkelstücke im Querschnitt ein Z-Profil haben, wobei es von weiterem Vorteil ist, wenn zumindest die untere Aufnahme eine Abkantung zur gesicherten Aufnahme des Profils des Rahmens aufweist. So lässt sich das Profil des Rahmens regelrecht in die untere Aufnahme hineinstellen und auf die obere Aufnahme auflegen oder ebenfalls hineinstellen. Eine Verrastung zur abermaligen Absicherung ist denkbar.

Insbesondere zur Sicherung gegen ein unbeabsichtigtes Abheben des Rahmens bzw. der gesamten Funktionsgruppe vom Tragegestell kann die Aufnahme mit Sicherungsmitteln zum Festlegen des eingehängten Rahmens ausgestattet sein. Die Sicherungsmittel rufen zwischen der Aufnahme und dem Rahmen eine Klemmwirkung hervor. Im Konkreten können die Sicherungsmittel als vorzugsweise selbstschneidende/selbstfurchende Schauben oder als Schrauben zum Einsetzen in ein in dem Rahmen und/oder in der Aufnahme ausgebildetes Gewinde ausgeführt sein. So ist es mit den Sicherungsmitteln möglich, den in das Tragegestell eingehängten Rahmen im Bereich der Aufnahmen festzulegen, so dass eine hinreichende Standsicherheit gewährleistet ist.

Die C-Profile der Längsstreben, mit denen der Rahmen in die Aufnahmen des Tragegestells eingehängt wird, sind zur Bildung des Rahmens in vorteilhafter Weise so angeordnet, dass sie in einander entgegengesetzte Richtung öffnen.

Die Längsstreben könnten aus Stahlblech, vorzugsweise aus verzinktem und/oder beschichtetem Stahlblech, bestehen. Bei der Beschichtung kann es sich typischerweise um eine sogenannte Colorbeschichtung handeln bzw. um eine Pulverbeschichtung.

In weiter vorteilhafter Weise sind die Längsstreben an ausgewählten Stellen mit Löchern bzw. Durchgängen zum Abfluss von Wasser ausgestattet, so dass auch insoweit dadurch einer Korrosion weitestgehend entgegengewirkt wird.

Im Rahmen einer weiteren vorteilhaften Ausgestaltung sind die Längsstreben als Kabelkanäle ausgebildet oder können zumindest entsprechend genutzt werden. Auch ist es denkbar, dass die Längsstreben zur Aufnahme weiterer Funktionselemente ausgebildet und gegebenenfalls entsprechend vorgelocht sind, um nämlich entsprechende Montagen vornehmen zu können. Die Montage kann mit selbstschneidenden Schrauben oder aber auch mittels Nieten erfolgen.

Wie bereits zuvor erwähnt, kann der Rahmen über seine gesamte Länge hinweg mehrere Querstreben umfassen, wie dies zur Gewährleistung einer hinreichenden Steifigkeit des Rahmens erforderlich ist. Die Anzahl der Querstreben hängt letztendlich von der Länge des Rahmens ab. Die Querstreben dienen in weiter vorteilhafter Weise zur Stabilisierung und zum Verhindern des Verwindens der C-Profile. Außerdem können die Querstreben zur Aufnahme weiterer C-Profile dienen. Dabei ist es denkbar, dass die Querstreben mittels Schrauben befestigbar sind.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung eines Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigt
- Fig. 1: in einer schematischen Ansicht ein Ausführungsbeispiel einer erfindungsgemäßen Vorrichtung mit Solarmodulen als Funktionsgruppen, mit die Solarmodule tragendem Rahmen, mit den Rahmen aufnehmendem Tragegestell, und mit Stützfüßen zur Aufnahme des Tragegestells, wobei die Dachkonstruktion nebst tragfähiger Unterkonstruktion angedeutet ist, und
- Fig. 2: in einer schematischen Seitenansicht das Tragegestell mit eingehängtem Rahmen,

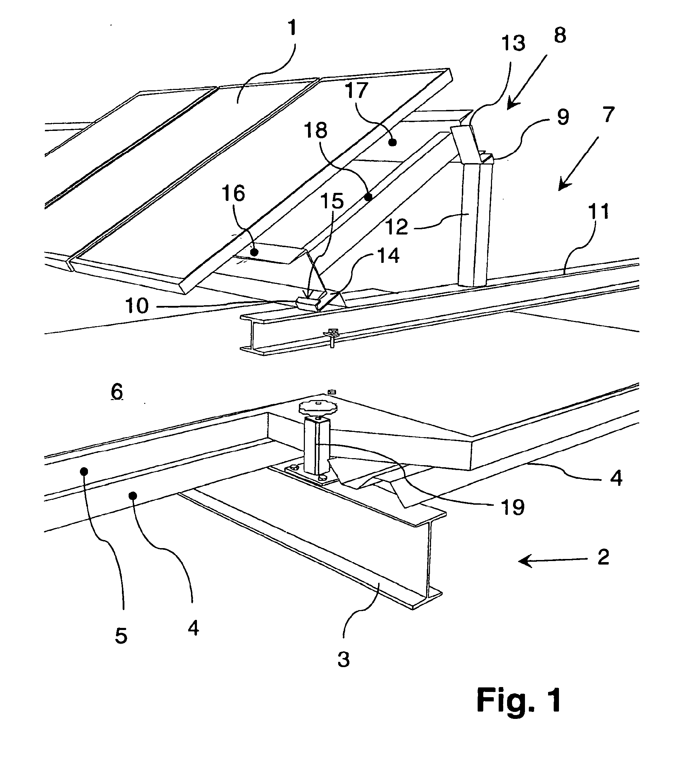

Fig.1 zeigt in einer schematischen Ansicht ein Ausführungsbeispiel einer Vorrichtung zum Befestigen von Solarmodulen 1 auf Flachdächern, wobei es sich bei dem Flachdach 2 vorzugsweise um das Flachdach einer Industriehalle handelt. Das Flachdach 2 ist angedeutet durch eine tragfähige Unterkonstruktion 3, ein Wellblech 4 und eine darüber angeordnete thermische Isolierung 5 nebst abschließender Dachhaut 6.

Die Vorrichtung umfasst ein auf dem Dach 2 bzw. auf der tragfähigen Unterkonstruktion 3 des Dachs 2 verankerbares Tragegestell 7 und einen in das Tragegestell 7 einhängbaren Rahmen 8. An dem Rahmen 8 sind die Solarmodule 1 befestigt. Das Tragegestell 7 umfasst eine obere Aufnahme 9 und eine untere Aufnahme 10 zum Einhängen des Rahmens 8 in geneigter Position. Die Position des Rahmens 8 ist derart vorgegeben, dass eine optimale Ausnutzung der über die Sonne einstrahlenden Energie möglich ist.

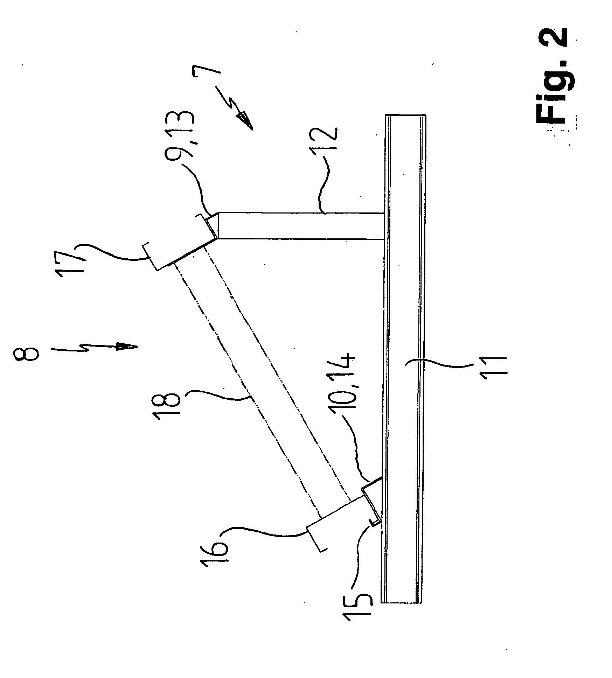

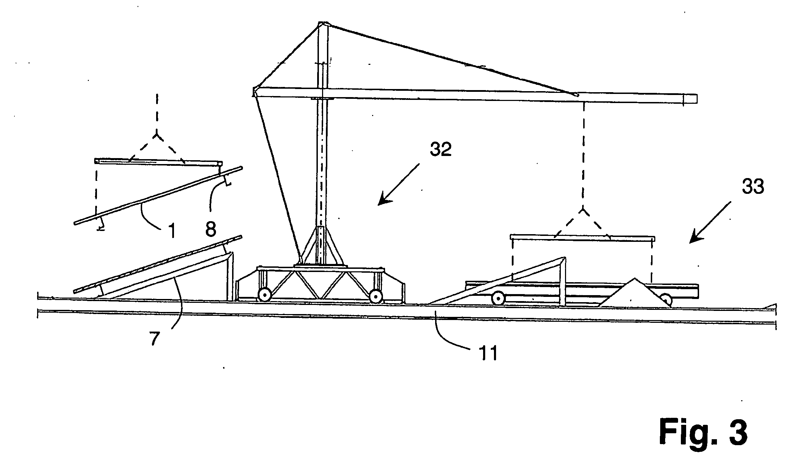

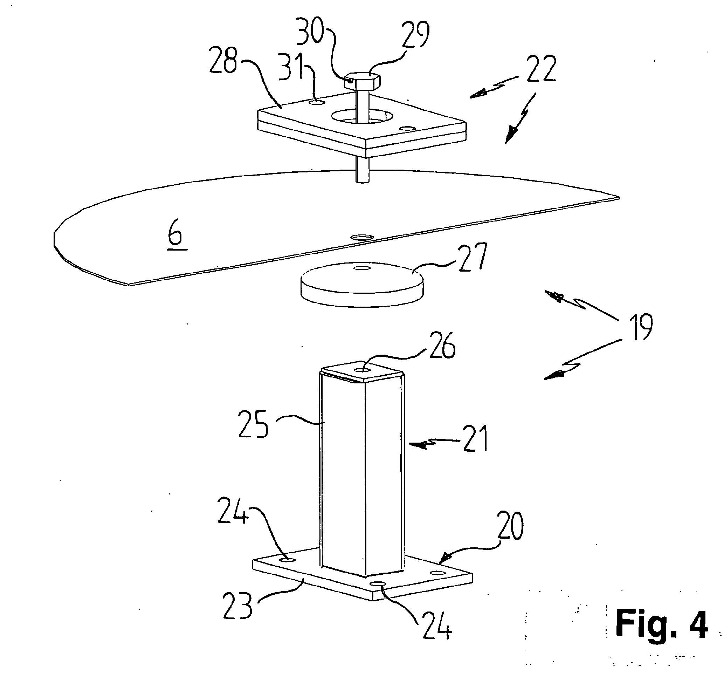

Die Fig. 1 und 2 lassen gemeinsam erkennen, dass das Tragegestell 7 einen als Basis dienenden Horizontalträger 11 und eine auf dem Horizontalträger 11 stehende Vertikalstütze 12 umfasst. Am freien Ende der Vertikalstütze 12 ist die obere Aufnahme 9 angeordnet. Die untere Aufnahme 10 ist direkt auf dem Horizontalträger 11 ausgebildet.

Die Fig. 1 und 2 lassen des Weiteren erkennen, dass die Vertikalstütze 12 nahe dem freien Ende des Horizontalträgers 11 angeordnet ist, nämlich orthogonal auf dem Horizontalträger 11. Eine Höhenverstellbarkeit der Vertikalstütze 12 ist denkbar, in den Figuren jedoch nicht gezeigt.

An dieser Stelle sein angemerkt, dass die Vertikalstütze 12 an dem Horizontalträger 11 schweißtechnisch befestigt ist.

Die Fig. 1 und 2 zeigen des Weiteren, dass der Horizontalträger 11 als Doppel-T-Träger ausgeführt ist. Die obere Aufnahme 9 und die untere Aufnahme 10 sind als Winkelstücke 13, 14 ausgeführt und dienen zum Einhängen des Rahmens 8. Die Aufnahmen 9, 10 bzw. Winkelstücke 13, 14 sind dabei derart dimensioniert und ausgelegt, dass beidseits Profile bzw. Teile des Rahmens 8 einhängbar sind, so dass eine Verkettung möglich ist.

Fig. 2 zeigt deutlich, dass die Winkelstücke, 13, 14 im Querschnitt ein Z-Profil haben, wobei die untere Aufnahme 10 bzw. das entsprechende Winkelstück 14 eine Abkantung 15 zur gesicherten Aufnahme des Profils des Rahmens 8 aufweist. Eine sichere Abstützung des Rahmens 8 ist damit gewährleistet.

In Bezug auf die zum Festlegen des eingehängten Rahmens 8 vorgesehenen Sicherungsmittel sei zur Vermeidung von Wiederholungen auf den allgemeinen Teil der Beschreibung verwiesen, zumal diese Sicherungsmittel den Figuren nicht entnehmbar sind.

In Bezug auf den Rahmen 8 lässt sich den Figuren 1 und 2 entnehmen, dass dieser obere und untere Längsstreben 16, 17 zum Einhängen in das Tragegestell 7 bzw. in die Aufnahme 9, 10 des Tragegestells 7 umfasst. Die Längsstreben 16, 17 sind mittels Querstreben 18 miteinander verbunden.

Fig. 2 lässt besonders deutlich erkennen, dass die Längsstreben 16, 17 im Querschnitt ein C-Profil haben, wobei die Längsstreben 16, 17 mit ihrem C-Profil in einander entgegengesetzten Richtung öffnen.

Fig. 1 zeigt andeutungsweise, dass die Längsstreben 16, 17 seitlich über die Querstreben 18 hinausragen und mit den hinausragenden Bereichen zum Einhängen in die Aufnahmen 9, 10 des Tragegestells 7 dienen. Über die gesamte Länge hinweg kann der Rahmen 8 mehrere Querstreben 18 umfassen, so dass bei entsprechender Länge der Längstreben 16, 17 in Verkettung mehrere Solarmodule 1 am Rahmen 8 anordenbar sind.

In Fig. 1 ist bereits angedeutet, dass die Vorrichtung so ausgelegt ist, dass nur wenige, definierte Kraftübertragungspunkte an "starken Stellen" des Daches 2 vorhanden sind. Somit treten keine flächigen Lasten auf, die die Dachhaut bzw. Dämmung gefährden können. Stattdessen ist ein kraftschlüssiger Verbund realisiert, der auch zuverlässig extremen Windbedingungen standhält.

Im Konkreten sind zur Positionierung des Tragegestells 7 oberhalb der Dachisolierung 5 durch die Dachisolierung 5 hindurchragende Verankerungsfüße 19 vorgesehen, die die Last des Tragegestells 7 nebst Rahmen 8 und Solarmodul 1 aufnehmen.

Schließlich sei angemerkt, dass die voranstehenden Ausführungen lediglich zur Erläuterung des hier gewählten Ausführungsbeispiels dienen, jedoch nicht die beanspruchte Lehre auf das Ausführungsbeispiel einschränken.

### Bezugszeichenliste

- 1: Funktionsgruppe, Solarmodul
- 2: Flachdach, Dach
- 3: tragfähige Unterkonstruktion des Dachs
- 4: Wellblech des Dachs
- 5: thermische Isolierung, Dachisolierung
- 6: Dachhaut
- 7: Tragegestell
- 8: Rahmen
- 9: obere Aufnahme des Tragegestells
- 10: untere Aufnahme des Tragegestells
- 11: Horizontalträger des Tragegestells
- 12: Vertikalstütze des Tragegestells
- 13: oberes Winkelstück
- 14: unteres Winkelstück
- 15: Abkantung der unteren Aufnahme
- 16: untere Längsstrebe des Rahmens
- 17: obere Längsstrebe des Rahmens
- 18: Querstrebe des Rahmens
- 19: Verankerungsfuß

## Patentansprüche

1. Vorrichtung zum Befestigen von Solarmodulen (1) auf Flachdächern (2), insbesondere auf Industriehallen, mit einem auf dem Dach (2) verankerbaren Tragegestell (7) und einem in das Tragegestell (7) einhängbaren Rahmen (8), an dem das Solarmodul (1) befestigt ist, wobei das Tragegestell (7) eine obere Aufnahme (9) und eine untere Aufnahme (10) zum Einhängen des Rahmens (8) in geneigter Position umfasst, wobei der Rahmen (8) obere und untere Längsstreben (16, 17) zum Einhängen in die Aufnahme (9, 10) des Tragegestells (7) sowie die Längsstreben (16, 17) verbindende Querstreben (18) umfasst, wobei die Längsstreben (16, 17) im Querschnitt ein C-Profil haben und seitlich über die Querstreben (18) hinausragen und mit den hinausragenden Bereichen zum Einhängen des Rahmens (8) in die Aufnahme (9, 10) des Tragegestells (7) dienen.

2. Vorrichtung nach Anspruch 1, **dadurch gekennzeichnet, dass** das Tragegestell (7) einen als Basis dienenden Horizontalträger (11) und zumindest eine auf dem Horizontalträger (11) stehende Vertikalstütze (12) mit der oberen Aufnahme (9) umfasst.

3. Vorrichtung nach Anspruch 2, **dadurch gekennzeichnet, dass** das Tragegestell (7) eine weitere, auf dem Horizontalträger (11) stehende Vertikalstütze (12) mit der unteren Aufnahme (10) umfasst.

4. Vorrichtung nach Anspruch 3, **dadurch gekennzeichnet, dass** die Vertikalstützen (12) nahe den freien Enden des Horizontalträgers (11), vorzugsweise orthogonal zu dem Horizontalträger (11), angeordnet sind.

5. Vorrichtung nach einem der Ansprüche 2 bis 4, **dadurch gekennzeichnet, dass** zumindest eine der beiden Vertikalstützen (12) vorzugsweise teleskopartig höhenverstellbar ist.

6. Vorrichtung nach einem der Ansprüche 2 bis 5, **dadurch gekennzeichnet, dass** die Vertikalstützen (12) an dem Horizontalträger (11) befestigt sind.

7. Vorrichtung nach einem der Ansprüche 2 bis 5, **dadurch gekennzeichnet, dass** die Vertikalstützen (12) und der Horizontalträger (11) aus Metall gefertigt und vorzugsweise miteinander verschweißt, verschraubt, in- oder aneinander gesteckt oder miteinander verrastet sind.

8. Vorrichtung nach einem der Ansprüche 2 bis 5, **dadurch gekennzeichnet, dass** die Vertikalstützen (12) integrale Bestandteile des Horizontalträgers (11) sind,
wobei der Horizontalträger (11) als Doppel-T-Träger oder als Hohlprofil ausgeführt sein kann.

9. Vorrichtung nach einem der Ansprüche 1 bis 8, **dadurch gekennzeichnet, dass** die obere und die untere Aufnahme (9, 10) als Winkelstücke (13, 14) oder Winkelprofile zum Einhängen des Rahmens (8) ausgebildet sind,
wobei die Winkelstücke (13, 14) derart dimensioniert und ausgelegt sein können, dass beidseits Profile bzw. Teile eines Rahmens (8) einhängbar sind, und/oder
wobei die Winkelstücke (13, 14) im Querschnitt ein Z-Profil haben können.

10. Vorrichtung nach Anspruch 9, **dadurch gekennzeichnet, dass** die untere Aufnahme (10) eine Abkantung (15) zur gesicherten Aufnahme des Profils des Rahmens (8) aufweist.

11. Vorrichtung nach einem Anspruch 9 oder 10, **dadurch gekennzeichnet, dass** die Aufnahme (9, 10) Sicherungsmittel zum Festlegen des eingehängten Rahmens (8) umfasst.

12. Vorrichtung nach Anspruch 11, **dadurch gekennzeichnet, dass** die Sicherungsmittel zwischen der Aufnahme (9, 10) und dem Rahmen (8) eine Klemmwirkung hervorrufen,
wobei die Sicherungsmittel als vorzugsweise selbstschneidende/ selbstfurchende Schrauben oder als Schrauben zum Einsetzen in ein in dem Rahmen (8) und/oder in der Aufnahme (9, 10) ausgebildetes Gewinde ausgeführt sein können.

13. Vorrichtung nach einem der Ansprüche 1 bis 12, **dadurch gekennzeichnet, dass** die Längsstreben (16, 17) aus Stahlblech, vorzugsweise aus verzinktem und/oder beschichtetem Stahlblech, bestehen,
wobei die Längsstreben (16, 17) an ausgewählten Stellen Löcher bzw. Durchgänge zum Abfluss von Wasser aufweisen können, und/oder
wobei die Längsstreben (16, 17) als Kabelkanäle ausgebildet und entsprechend nutzbar sein können, und/oder
wobei die Längsstreben (16, 17) zur Aufnahme weiterer Funktionselemente ausgebildet und gegebenenfalls entsprechend vorgelocht sein können.

14. Vorrichtung nach einem der Ansprüche 1 bis 13, **dadurch gekennzeichnet, dass** die Längsstreben (16, 17) mit ihren C-Profilen in einander entgegengesetzte Richtung öffnen.

15. Vorrichtung nach einem der Ansprüche 1 bis 14, **dadurch gekennzeichnet, dass** der Rahmen (8) über seine gesamte Länge hinweg mehrere Querstreben (18) umfasst,
wobei die Querstreben (18) zur Stabilisierung und zum Verhindern eines Verwindens der C-Profile und/oder zur Aufnahme weiterer C-Profile dienen.

## Claims

1. A device for fastening solar modules (1) to flat roofs (2), in particular on industrial premises, having a supporting frame (7) that can be anchored on the roof (2) and a frame (8) that can be mounted in the supporting frame (7) and to which the solar module (1) is fastened, wherein the supporting frame (7) comprises an upper holder (9) and a lower holder (10) for mounting the frame (8) in an inclined position, wherein the frame (8) comprises upper and lower longitudinal struts (16, 17) for clipping into the holders (9, 10) of the supporting frame (7) and transverse struts (18) connecting the longitudinal struts (16, 17), wherein the longitudinal struts (16, 17) have a C-shaped profile in cross-section and project laterally beyond the transverse struts (18) and with the projecting regions serve for clipping the frame (8) into the holders (9, 10) of the supporting frame (7).

2. A device according to claim 1, **characterised in that** the supporting frame (7) comprises a horizontal bearer (11) serving as the base and standing on the horizontal bearer (11) at least one vertical strut (12) carrying the upper holder (9).

3. A device according to claim 2, **characterised in that** the supporting frame (7) comprises a further vertical strut (12) which stands on the horizontal bearer (11) and carries the lower holder (10).

4. A device according to claim 3, **characterised in that** the vertical struts (12) are arranged close to the free ends of the horizontal beater (11), preferably orthogonally with respect to the horizontal bearer (11).

5. A device according to any one of claims 2 to 4, **characterised in that** at least one of the two vertical struts (12) is preferably telescopically height-adjustable.

6. A device according to any one of claims 2 to 5, **characterised in that** the vertical struts (12) are fastened to the horizontal bearer (11).

7. A device according to any one of claims 2 to 5, **characterised in that** the vertical struts (12) and the horizontal bearer (11) are made of metal and are preferably welded to one another, bolted to one another, inserted one in the other or interlocked with one another.

8. A device according to any one of claims 2 to 5, **characterised in that** the vertical struts (12) are integral parts of the horizontal bearer (11),
wherein the horizontal bearer (11) can be designed as an I-beam or as a hollow profile.

9. A device according to any one of claims 1 to 8, **characterised in that** the upper and lower holders (9, 10) are in the form of elbows (13, 14) or angled profiles for mounting the frame (8),
wherein the elbows (13, 14) can be dimensioned and designed in such a manner that profiles or parts of a frame (8) can be mounted on both sides and/or
wherein the elbows (13, 14) can have a Z-profile in cross-section.

10. A device according to claim 9, **characterised in that** the lower holder (10) has a folded edge (15) for securely receiving the profile of the frame (8).

11. A device according to claim 9 or 10, **characterised in that** the holder (9, 10) comprises securing means for fixing the mounted frame (8).

12. A device according to claim 11, **characterised in that** the securing means produce a clamping action between the holder (9, 10) and the frame (8),
wherein the securing means can be designed as preferably self-tapping screws or as screws for insertion in a thread formed in the frame (8) and/or in the holder (9, 10).

13. A device according to any one of claims 1 to 12, **characterised in that** the longitudinal struts (16, 17) consist of sheet steel, preferably of galvanised and/or coated sheet steel,
wherein at selected locations the longitudinal struts (16, 17) can have holes or apertures for water drainage, and/or
wherein the longitudinal struts (16, 17) can be in the form of cable conduits and can be used accordingly and/or,
wherein the longitudinal struts (16, 17) can be designed to receive further functional elements and if necessary can be correspondingly pre-punched.

14. A device according to any one of claims 1 to 13, **characterised in that** the longitudinal struts (16, 17) open in opposite directions with their C-profiles.

15. A device according to any one of claims 1 to 14, **characterised in that** the frame (8) comprises a plurality of cross-struts (18) over the entire length thereof,
wherein the cross-struts (18) serve for stabilisation and to prevent distortion of the C-profiles and/or for receiving further C-profiles.

## Revendications

1. Dispositif destiné à fixer des modules solaires (1) sur des toits plats (2), en particulier sur des hangars industriels, comprenant un châssis porteur (7) pouvant être ancré sur le toit (2) et un cadre (8) pouvant être suspendu dans le châssis porteur (7) sur lequel le module solaire (1) est fixé, étant entendu que le chassis porteur (7) comprend un logement supérieur (9) et un logement inférieur (10) permettant de suspendre le cadre (8) dans une position inclinée, étant entendu que le cadre (8) comprend des montants longitudinaux supérieur et inférieur (16, 17) permettant la suspension dans le logement (9, 10) du châssis porteur (7) ainsi que des montants transversaux (18) reliant les montants longitudinaux (16, 17), étant entendu que les montants longitudinaux (16, 17) présentent dans leur section un profil en forme de C et qu'ils s'étendent latéralement au-delà des montants transversaux (18) et servent, avec leurs zones en dépassement, à suspendre le cadre (8) dans le logement (9, 10) du châssis porteur (7).

2. Dispositif selon la revendication 1, **caractérisé en ce que** le châssis porteur (7) comprend un support horizontal (11) servant de base et au moins un appui vertical (12) agencé sur le support horizontal (11) comprenant le logement supérieur (9).

3. Dispositif selon la revendication 2, **caractérisé en ce que** le châssis porteur (7) comprend un autre appui vertical (12) agencé sur le support horizontal (11) comprenant le logement inférieur (10).

4. Dispositif selon la revendication 3, **caractérisé en ce que** les appuis verticaux (12) sont agencés à proximité des extrémités libres du support horizontal (11), de préférence perpendiculairement au support horizontal (11).

5. Dispositif selon l'une des revendications 2 à 4, **caractérisé en ce qu'**au moins un des deux appuis verticaux (12) est de préférence réglable en hauteur de façon télescopique.

6. Dispositif selon l'une des revendications 2 à 5, **caractérisé en ce que** les appuis verticaux (12) sont fixés sur le support horizontal (11).

7. Dispositif selon l'une des revendications 2 à 5, **caractérisé en ce que** les appuis verticaux (12) et le support horizontal (11) sont fabriqués en métal et de préférence soudés ou vissés l'un avec l'autre, insérés l'un dans ou sur l'autre ou enclenchés l'un avec l'autre.

8. Dispositif selon l'une des revendications 2 à 5, **caractérisé en ce que** les appuis verticaux (12) font partie intégrante du support horizontal (11), étant entendu que le support horizontal (11) peut être réalisé sous forme de support en double T ou de profilé creux.

9. Dispositif selon l'une des revendications 1 à 8, **caractérisé en ce que** les logements supérieur et inférieur (9, 10) sont réalisés sous forme de pièces coudées (13, 14) ou de profilés coudés aux fins de la suspension du cadre (8),
étant entendu que les pièces coudées (13, 14) sont dimensionnées et conçues de telle sorte que des profilés ou des parties d'un cadre (8) peuvent être suspendus des deux côtés, et/ou
étant entendu que les pièces coudées (13, 14) peuvent présenter dans leur section un profil en forme de Z.

10. Dispositif selon la revendication 9, **caractérisé en ce que** le logement inférieur (10) présente un chanfrein (15) permettant de recevoir de façon sûre le profil du cadre (8).

11. Dispositif selon la revendication 9 ou 10, **caractérisé en ce que** le logement (9, 10) comprend des moyens de fixation permettant d'immobiliser le cadre (8) suspendu.

12. Dispositif selon la revendication 11, **caractérisé en ce que** les moyens de fixation créent une action de serrage entre le logement (9, 10) et le cadre (8), étant entendu que les moyens de fixation peuvent être exécutés sous forme de préférence de vis autotaraudeuses/autoforantes ou sous forme de vis permettant l'insertion dans un filetage réalisé dans le cadre (8) et/ou dans le logement (9, 10).

13. Dispositif selon l'une des revendications 1 à 12, **caractérisé en ce que** les montants longitudinaux (16, 17) sont réalisés en tôle d'acier, de préférence en tôle d'acier galvanisée et/ou enduite,
étant entendu que les montants longitudinaux (16, 17) peuvent présenter, à des endroits sélectionnés, des trous ou des passages pour l'écoulement d'eau, et/ou
étant entendu que les montants longitudinaux (16, 17) peuvent être réalisés sous forme de gouttières de câbles et être utilisés en conséquence, et/ou étant entendu que les montants longitudinaux (16, 17) peuvent être réalisés de façon à recevoir d'autres éléments fonctionnels, et le cas échéant, être prépoinçonnés en conséquence.

14. Dispositif selon l'une des revendications 1 à 13, **caractérisé en ce que** les montants longitudinaux (16, 17) sont ouverts avec leurs profils en forme de C dans des directions opposées.

15. Dispositif selon l'une des revendications 1 à 14, **caractérisé en ce que** le cadre (8) comprend sur l'ensemble de sa longueur plusieurs montants transversaux (18),
étant entendu que les montants transversaux (18) servent à la stabilisation et à la prévention d'une torsion des profilés en forme de C et/ou à la réception de profilés en forme de C supplémentaires.
